# EUROPÄISCHE PATENTSCHRIFT

(11) **EP 0 418 632 B1**
(45) Veröffentlichungstag und Bekanntmachung des Hinweises auf die Patenterteilung: **03.11.1993**
(21) Anmeldenummer: 90116925.0
(22) Anmeldetag: 04.09.1990
(51) Int. Cl.: C01G 23/053, C22B 34/12

(54) **Verfahren zum Herstellen von Titandioxid**
Process for the preparation of titanium dioxide
Procédé de préparation du bioxyde de titane

(30) Priorität: 16.09.1989 DE 3930991
(43) Veröffentlichungstag der Anmeldung: 27.03.1991
(73) Patentinhaber: BAYER AG, 51368 Leverkusen (DE)
(72) Erfinder: Lailach, Günter, Dr., D-4150 Krefeld (DE); Gerken, Rudolf, Dr., D-4150 Krefeld (DE)

(56) Entgegenhaltungen:
- EP-A- 0 097 259
- EP-A- 0 177 806
- CHEMICAL ABSTRACTS, Band 85, Nr. 22, 29. November 1976, Seite 102, Zusammenfassung Nr. 161963m, Columbus, Ohio, US; Y.I. MEL'NIKOV et al.: "Experiment in using titanium dioxide trapped in a dust-removing unit", & LAKOKRAS. MATER. IKH. PRIMEN. 1976, (2), 66-7

## Beschreibung

Die vorliegende Erfindung betrifft ein Verfahren zum Herstellen von Titandioxid durch Aufschluß titanhaltiger Rohstoffe mit Schwefelsäure, Hydrolyse des dabei gebildeten Titanylsulfats, Abtrennen der metallsulfathaltigen Schwefelsäure von dem bei der Hydrolyse gebildeten Titanoxidhydrat, Bleiche des Titanoxidhydrats durch reduzierende Behandlung in Gegenwart von Schwefelsäure, Kalzinieren des gebleichten Titanoxidhydrats zu Titandioxid, Abtrennen von Staub und H₂SO₄ aus den Kalziniergasen und Entschwefelung der SO₂-haltigen Abgase unter Bildung von 2 bis 20 gew.-%iger Schwefelsäure.

Bei der Kalzinierung des Titanoxidhydrats, das als Zwischenprodukt bei der Titandioxidherstellung nach dem Sulfatverfahren anfällt, entstehen Abgase, die SO₂, H₂SO₄ sowie Titandioxid- und Titanoxidhydratstaub enthalten. Diese Gase werden üblicherweise mit Wasser gewaschen. Der dabei abgeschiedene Staub wird in den Prozeß, vorzugsweise in die Bleiche zurückgeführt (EP-A 97 259). Anschließend werden in einer elektrostatischen Gasreinigung (EGR) Schwefelsäurenebel abgeschieden. Die Abgase enthalten nach diesen Reinigungsmaßnahmen als Verunreinigung im wesentlichen noch SO₂.

Zur Reduzierung von SO₂ in Abgasen aus der Titandioxidkalzinierung sind Verfahren bekannt, bei denen das SO₂ an feuchter Aktivkohle zu Schwefelsäure umgesetzt wird, die mit Wasser als 5 bis 20 %ige verdünnte Säure aus der Aktivkohle ausgewaschen wird (Lurgi Schnellinformation 1217/12, 76, Seiten 6 - 11). Für solche zwar reine, aber stark verdünnte Schwefelsäure gibt es bisher kaum Verwendungsmöglichkeiten. Ihre Eindampfung auf eine Konzentration von 80 bis 96 %, die für die Verwendung beim TiO₂-Rohstoffaufschluß geeignet ist, würde den Gesamtprozeß wirtschaftlich deutlich beeinträchtigen.

Ziel der Erfindung ist es deshalb, ein Verfahren zur Verfügung zu stellen, das es erlaubt, alle in den Kalziniergasen enthaltenen Wertstoffe auf wirtschaftlich vorteilhafte Weise in den Prozeß zurückzuführen.

Dieses erfindungsgemäße Ziel wird dadurch erreicht, daß die heißen, staubhaltigen Kalziniergase mit 10 bis 50 gew.-%iger Schwefelsäure gekühlt und gewaschen werden, wobei aus dem Wäscher zwecks Aufrechterhaltung der gewünschten Schwefelsäurekonzentration in den Wäscher die 2 bis 20 gew.-%ige Schwefelsäure, die bei der Entschwefelung der Kalziniergase anfällt, sowie gegebenenfalls Wasser eingespeist wird und kontinuierlich oder portionsweise eine Suspension von Titandioxid und Titanoxidhydrat in 10 bis 50 gew.-%iger Schwefelsäure zur Titanoxidhydratbleiche ausgespeist wird.

Bei einer vorteilhaften Ausführung des erfindungsgemäßen Verfahrens wird die gegebenenfalls feststoffhaltige Schwefelsäure, die bei der Reinigung der im Wäscher gekühlten und gewaschenen Kalziniergase in einer EGR anfällt, entweder in den Wäscher abgeleitet oder vorteilhaft zusammen mit der aus dem Wäscher ausgespeisten feststoffhaltigen Schwefelsäure in die Titanoxidhydratbleiche geleitet. Dort erfolgt, gegebenenfalls unter Zusatz von weiterer Schwefelsäure oder Salzsäure, die reduzierende Behandlung des Titanoxidhydrats zwecks Entfernung von Schwermetallionen.

Die Entschwefelung der vorgereinigten Kalziniergase, d.h. die Entfernung von SO₂ unter Bildung von Schwefelsäure, kann auf bekannte Weise durch katalytische Oxidation an feuchter Aktivkohle oder durch Oxidation mit Wasserstoffperoxid oder Peroxischwefelsäure erfolgen.

Bei einer bevorzugten Ausführung des erfindungsgemäßen Verfahrens wird der titanhaltige Staub aus den heißen Kalziniergasen vor deren Wäsche weitgehend abgeschieden und direkt in den Kalzinierofen zurückgeführt. Besonders bevorzugt wird die Abscheidung des Staubes mit Zyklonabscheidern. Durch diese bevorzugte trockene Abscheidung und Rückführung des titanhaltigen Staubes wird eine deutliche Verminderung des Energiebedarfs des Prozesses erreicht. Bevorzugt werden mindestens 50 %, vorzugsweise mindestens 70 %, des aus dem Kalzinierofen ausgetragenen titanhaltigen Staubes trocken aus den Kalziniergasen abgeschieden und direkt in den Kalzinierofen zurückgeführt. Besonders bevorzugt erfolgt die Rückführung des trocken abgeschiedenen titanhaltigen Staubes dergestalt, daß der trockene Staub mit dem feuchten Filterkuchen aus gebleichtem Titanoxidhydrat gemischt und das Gemisch in den Kalzinierofen eingetragen wird.

Vorteilhaft werden die Kalzinierabgase in einem Abhitzekessel auf eine Temperatur zwischen 200 und 300°C, vorzugsweise 220 bis 250°C, abgekühlt, bevor sie durch den Kontakt mit der 10 bis 50 gew.-%igen Schwefelsäure weiter gekühlt und gewaschen werden.

Eine besonders wirtschaftliche Ausführungsform der vorliegenden Erfindung ist somit ein Verfahren zur Herstellung von Titandioxid durch Aufschluß titanhaltiger Rohstoffe mit Schwefelsäure, Hydrolyse des dabei gebildeten Titanylsulfats, Abtrennen der metallsulfathaltigen Schwefelsäure von dem bei der Hydrolyse gebildeten Titanoxidhydrat, Bleiche des Titanoxidhydrates in Gegenwart von Schwefelsäure, Kalzinieren des gebleichten Titanoxidhydrates zum Titandioxid und Entschwefelung der SO₂-haltigen Kalzinierabgase unter Bildung von 2 bis 20 gew.-%iger Schwefelsäure, dadurch gekennzeichnet, daß aus den in einem Abhitzekessel auf 200 bis 300°C abgekühlten heißen Kalzinierabgasen mindestens 50 Gew.-% der titanhaltigen Feststoffe trocken, vorzugsweise in Zyklonabscheidern abgeschieden und zusammen mit dem Filterkuchen aus gebleichtem Titanoxidhydrat wieder in den Kalzinierofen zurückgeführt werden, daß die Kalzinierabgase danach durch Wäsche mit 10 bis 50 gew.-%iger Schwefelsäure gekühlt und von weiterem Staub gereinigt werden, wobei als Kühlmedium die 2 bis 20 gew.-%ige Schwefelsäure eingesetzt wird, die bei der SO₂-Entfernung aus den Kalziniergasen anfällt und im Kontakt mit den Kalziniergasen auf 10 bis 50 Gew.-% H₂SO₄-Gehalt konzentriert und zusammen mit den in dieser Schwefelsäure abgeschiedenen titanhaltigen Feststoffen in die Titanoxidhydratbleiche zurückgeführt wird, daß die Kalzinierabgase anschließend in EGRs von H₂SO₄-Nebeln und restlichen Feststoffen befreit und letztlich in eine Entschwefelungsanlage eingeleitet werden, in der die Entfernung von SO₂ unter Bildung von verdünnter, 2 bis 20 gew.-%iger Schwefelsäure erfolgt, die zum Waschen und Kühlen der Kalziniergase und anschließend bei der Bleiche verwendet wird.

Im folgenden wird die Erfindung beispielhaft erläutert, ohne daß hierin eine Einschränkung gesehen werden soll.

### Beispiel

Stündlich wurden zwecks Bleiche 15 t Filterkuchens, der 5,25 t gewaschenen, SO₄²⁻-haltigen Titanoxidhydrates enthält, mit 1,15 t Wassers und 1,35 t einer Suspension gemischt, die 315 kg H₂SO₄ und 46 kg TiO₂ enthält, welche aus den Kalziniergasen zurückgewonnen worden waren. Zusätzlich wurden 680 kg 96 gew.-%iger Schwefelsäure zugegeben. Die Bleiche des Titanoxidhydrats erfolgte durch Zugabe von Aluminiumpulver.

Die Suspension wurde anschließend filtriert, der Filterkuchen mit Einstellchemikalien und mit 172 kg trockenen, aus den Kalziniergasen abgetrennten titanhaltigen Staubes versetzt und in einen Drehrohrofen eingespeist. Als Produkte der Kalzinierung fielen stündlich 4 t Titandioxid sowie 29.000 m³ₙ Kalzinierabgase an.

Die 410°C heißen Abgase enthielten 187 kg titanhaltigen Staubes (gerechnet als TiO₂) und 326 kg Schwefelverbindungen (gerechnet als H₂SO₄). Die Gase wurden in einem Abhitzekessel auf 245°C abgekühlt, wobei 3,4 t 6bar Dampfes anfielen. Danach wurden in einem Zyklonabscheider 79 % des Staubes abgeschieden und trocken in den Ofen zurückgeführt, wie oben angegeben. Anschließend wurden die Kalziniergase in einem Wäscher mit ca. 25 gew.-%iger Schwefelsäure, in der der restliche titanhaltige Staub abgeschieden und suspendiert wurde, gekühlt und gewaschen. Die auf 74°C gekühlten Abgase wurden in einer EGR von restlichen Feststoffen und Schwefelsäurenebeln befreit. Die in der EGR abgeschiedenen Stoffe wurden in den Gaswäscher abgeleitet.

Die so gereinigten und gekühlten Abgase enthielten noch 5,0 g SO₂/m³ₙ. Sie wurden durch eine Aktivkohleschicht geleitet, in der das SO₂ zu H₂SO₄ umgesetzt wurde. Die entschwefelten Abgase, die noch 310 mg SO₂/m³ₙ enthielten, wurden durch den Kamin abgeleitet. Bei der Entschwefelung fielen 208 kg H₂SO₄ an, die durch Besprühen der Kohle mit Wasser als 5,1 gew.-%ige Schwefelsäure ausgewaschen wurden. 4,6 t dieser Säure wurden stündlich in den Wäscher eingeleitet. Die Ausspeisung der Suspension zur Bleiche erfolgte über Standregelung.

## Patentansprüche

1. Verfahren zur Herstellung von Titandioxid durch Aufschluß titanhaltiger Rohstoffe mit Schwefelsäure, Hydrolyse des dabei gebildeten Titanylsulfats, Abtrennen der metallsulfathaltigen Schwefelsäure von dem bei der Hydrolyse gebildeten Titanoxidhydrat, Bleiche des Titanoxidhydrats durch reduzierende Behandlung in Gegenwart von Schwefelsäure, Kalzinieren des gebleichten Titanoxidhydrats zu Titandioxid, Abtrennen von Staub und H₂SO₄ aus den Kalziniergasen und Entschwefelung der SO₂-haltigen Kalzinierabgase unter Bildung von 2 bis 20 gew.-%iger Schwefelsäure, dadurch gekennzeichnet, daß die Kalzinierabgase mit einer Suspension von titanhaltigem Staub in 10 bis 50 gew.-%iger Schwefelsäure gekühlt und gewaschen werden, wobei zur Aufrechterhaltung der gewünschten Schwefelsäurekonzentration 2 bis 20 gew.-%ige Schwefelsäure, die bei der SO₂-Entfernung aus den vorgereinigten Abgasen anfällt und gegebenenfalls Wasser in den Wäscher einspeist und Suspension aus dem Wäscher in die Titanoxidhydratbleiche ausgespeist wird.

2. Verfahren gemäß Anspruch 1, dadurch gekennzeichnet, daß aus den heißen Kalziniergasen mindestens 50 %, vorzugsweise mehr als 70 %, des titanhaltigen Staubes abgeschieden werden und die Gase anschließend mit einer Suspension von titanhaltigem Staub in 10 bis 50 gew.-%iger Schwefelsäure gekühlt und gewaschen werden.

3. Verfahren gemäß Anspruch 2, dadurch gekennzeichnet, daß die Abscheidung des trockenen Staubes aus den heißen Kalzinierabgasen in Zyklonabscheidern geschieht.

4. Verfahren gemäß einem oder mehrerer der Ansprüche 1 bis 3, dadurch gekennzeichnet, daß die Kalzinierabgase vor ihrer Reinigung in einem Abhitzekessel auf 200 bis 300°C, vorzugsweise 220 bis 250°C, abgekühlt werden.

5. Verfahren gemäß einem oder mehrerer der Ansprüche 2 bis 4, dadurch gekennzeichnet, daß der aus den heißen Kalzinierabgasen trocken abgeschiedene Staub mit dem gebleichten Titanoxidhydrat gemischt und in den Kalzinierofen zurückgeführt wird.

## Claims

1. A process for the preparation of titanium dioxide by the decomposition of titanium-containing raw materials with sulphuric acid, hydrolysis of the resulting titanyl sulphate, removal of the metal sulphate-containing sulphuric acid from the titanium hydroxide formed by hydrolysis, bleaching of the titanium hydroxide by reductive treatment in the presence of sulphuric acid, calcining of the bleached titanium hydroxide to titanium dioxide, removal of dust and H₂SO₄ from the calcining gases and desulphurization of the SO₂-containing exhaust gases of calcination with formation of 2 to 20% by weight sulphuric acid, characterized in that the exhaust gases of calcination are cooled and scrubbed with a suspension of titanium-containing dust in 10 to 50% by weight sulphuric acid, 2 to 20% by weight sulphuric acid obtained when SO₂ is removed from the prepurified exhaust gases and optionally water being fed into the scrubber to maintain the required sulphuric acid concentration, and suspension being removed from the scrubber to be transferred to the titanium hydroxide bleaching.

2. A process according to Claim 1, characterised in that at least 50%, preferably more than 70% of the titanium-containing dust are separated from the hot calcining gases and the gases are subsequently cooled and scrubbed with a suspension of titanium-containing dust in 10 to 50% by weight sulphuric acid.

3. A process according to Claim 2, characterised in that removal of the dry dust from the hot exhaust gases of calcination is carried out in cyclone separators.

4. A process according to one or more or Claims 1 to 3, characterised in that the exhaust gases of calcination are cooled to 200-300°C, preferably to 220-250°C, in a waste heat boiler before their purification.

5. A process according to one or more of claims 2 to 4, characterised in that the dust which is deposited dry from the exhaust gases of calcination is mixed with the bleached titanium hydroxide and returned to the calcining oven.

## Revendications

1. Procédé de préparation du dioxyde de titane par attaque de matières premières titanifères par l'acide sulfurique, hydrolyse du sulfate de titanyle formé dans cette attaque, séparation de l'acide sulfurique contenant des sulfates métalliques et de l'oxyde hydraté de titane formé à l'hydrolyse, blanchiment de l'oxyde hydraté de titane par traitement réducteur en présence d'acide sulfurique, calcination de l'oxyde hydraté de titane blanchi, donnant du dioxyde de titane, séparation des poussières et de H₂SO₄ des gaz de calcination et désulfuration des gaz résiduaires de calcination contenant SO₂ avec formation d'un acide sulfurique à une concentration de 2 à 20 % en poids, caractérisé en ce que les gaz résiduaires de calcination sont refroidis et lavés par une suspension de poussières titanifères dans de l'acide sulfurique à une concentration de 10 à 50 % en poids, avec alimentation du laveur, pour maintien de la concentration voulue d'acide sulfurique, par de l'acide sulfurique à une concentration de 2 à 20 % en poids obtenu lors de l'élimination du SO₂ à partir des gaz résiduaires purifiés au préalable, et éventuellement de l'eau, et envoi de la suspension sortant du laveur au blanchiment de l'oxyde hydraté de titane.

2. Procédé selon revendication 1, caractérisé en ce que l'on sépare des gaz de calcination chauds au moins 50 % et de préférence plus de 70 % des poussières titanifères et on refroidit et lave ensuite les gaz par une suspension des poussières titanifères dans de l'acide sulfurique à une concentration de 10 à 50 % en poids.

3. Procédé selon revendication 2, caractérisé en ce que la séparation des poussières sèches à partir des gaz résiduaires de calcination chauds est réalisée dans des séparateurs-cyclones.

4. Procédé selon une ou plusieurs des revendications 1 à 3, caractérisé en ce que les gaz résiduaires de calcination sont refroidis avant purification dans une chaudière à récupération de chaleur à une température de 200 à 300°C, de préférence de 220 à 250°C.

5. Procédé selon une ou plusieurs des revendications 2 à 4, caractérisé en ce que les poussières séparées à sec des gaz résiduaires de calcination chauds sont mélangées avec l'oxyde hydraté de titane blanchi et recyclées au four de calcination.
